Europäisches Patentamt

(19) European Patent Office

Office européen des brevets

(11) Publication number: **0 002 102**

**B1**

(12) # EUROPEAN PATENT SPECIFICATION

(45) Date of publication of patent specification: **08.09.82**

(51) Int. Cl.³: **H 04 N 1/30, G 03 G 15/00**

(21) Application number: **78300439.3**

(22) Date of filing: **02.10.78**

(54) **Xerographic printer/copier device with converter for converting information from a latent image of an original document into electrical signals.**

(30) Priority: **17.11.77 US 852394**

(43) Date of publication of application:
**30.05.79 Bulletin 79/11**

(45) Publication of the grant of the patent:
**08.09.82 Bulletin 82/36**

(84) Designated Contracting States:
**DE FR GB NL SE**

(56) References cited:
**DE - B - 2 209 598**
**DE - A - 2 530 856**
**DE - A - 2 534 720**
**GB - A - 964 882**
**US - A - 3 681 527**
**US - A - 3 898 001**
**US - A - 4 046 471**

(73) Proprietor: **International Business Machines Corporation**
**Armonk, N.Y. 10504 (US)**

(72) Inventor: **Distefano, Thomas Herman**
**29 Birch Brook Road**
**Broxville New York 10703 (US)**
Inventor: **Kuhn, Lawrence**
**5 Courtmel Road**
**Mt. Kisco New York 10549 (US)**

(74) Representative: **Hawkins, Anthony George Frederick**
**IBM United Kingdom Patent Operations Hursley Park**
**Winchester Hants. S021 2JN (GB)**

Courier Press, Leamington Spa, England.

Xerographic printer/copier device with converter for converting information from a latent image of an original document into electrical signals

The present invention relates to xerographic printer/copier devices and is in particular directed to such a device when adapted to sense latent xerographic images of original documents to produce coded electrical signals.

Considerable attention is being paid to methods by which a xerographic printer/copier system can be used to convert information on an original document into electrical signals. A system with such a capability can be used as a high performance facsimile terminal. Two approaches to this objective are to use a scanning light beam to sense the document image either by scanning the original or by scanning the toned image on the photoconducting drum. Both of these schemes have serious drawbacks. As a result of the potential health hazard involved when a high power scanning beam is directed up and toward the original document, the former approach requires awkward covers. The latter scheme is fundamentally awkward in that both the photoconductor and the toner particles are often light absorbent so that contrast is very poor and the resulting signal difficult to process.

One early arrangement for recoding visual information for subsequent reading by scanning is shown in U.K. Patent Specification No. 964,882. That specification describes a specially constructed tape comprising a photoconductive layer and a conductive layer with connections such that after formation of a charge image, subsequent scanning by an electron beam causes generation of video signals at the connections.

In U.S. Patent Specification No. 3,681,527, the use of an electron beam for both writing information and for reading video information contained in an electrostatic latent image produced at a copy station within a copying machine is illustrated. In the system shown therein, a latent image is scanned by an electronic pin tube comprising a row of conductive pins sealed into the face of a cathode ray tube. The pins are positioned adjacent the photoconductive imaging element carrying the latent image. As the pins are scanned by the electron beam, the electric charge of the image acts on the pins to affect the beam current. The changes of beam current are sensed to provide output signal trains representing the image. The electronic pin tube is, however, a highly specialised device which is expensive to manufacture, bulky and requires extra circuits and accessories, such as scanning coils, for its operation.

German Auslegeschrift No. 2209598 also shows an arrangement for providing signals representing the content of a latent image in a copying machine. This arrangement employs a copy station, a print station and an electrometer pick up device which registers the charges on the imaging element. It has the disadvantage that the generated signals are of low amplitude and are, therefore, subject to error, especially in the electrically noisy environment of a copier.

Over the past few years, xerographic machines have been adapted for printing information received in coded form, using a scanning light beam, usually generated by a laser, which is modulated in accordance with the coded information. Initially such devices were employed as high speed computer output printers. However, copier/printers which can accept both original documents and coded data as inputs are now commercially available. Details of such a copier/printer can be found in U.S. Patent Specification No. 4,046,471. It is an object of the invention to incorporate into a machine of this type an arrangement for providing output signals representative of a latent image on the imaging element and using a minimum of added components.

According to the invention, there is provided a xerographic printer/copier device including a converter for converting information from a latent image of an original document into electrical signals comprising a photoconductive imaging element having a surface movable along a closed path past a plurality of processing stations including a charging station, a copying station operable to expose the surface, when charged, to an image of an original document to form a latent image thereon, and a printing station operable to expose the surface, when charged, to a modulated light beam scanned across the surface along a fixed line position orthogonal to the direction of movement thereof to form a latent image on the surface corresponding to modulation of the beam, characterised by a sense electrode positioned at the printing station and extending across the surface adjacent said line position and spaced from the surface such as to sense changes of charge on the surface whereby, when a latent image produced by the copying station is discharged by scanning by the light beam, when unmodulated, electrical signals corresponding to the content of the latent image are induced in the electrode, and means coupled to the sense electrode to modify and convert the electrical signals to coded signals.

Preferred embodiments of the invention will now be described by way of example with reference to the drawings in which:

Figure 1 is a simplified schematic representation of a known xerographic printer/copier device;

Figure 2 is a schematic representation of a portion of the Figure 1 device incorporating components embodying the present invention;

Figure 3 is a cross sectional view of the sense electrode system and photoconductor drum shown in Figure 2;

Figure 4 is a waveform depicting the general characteristics of the current induced in the sense electrode when a beam of light is scanned across a charged area of a photoconductor;

Figure 5 shows a circuit schematic for the compensation of a signal produced from the sense electrode system;

Figure 6 to 8 represent stages of the signal formation, detection and compensation from the circuit of Fig. 5; and

Figure 9 shows a segmented screen used in conjunction with the sense electrode together with a circuit for compensation of a photoconductor time response.

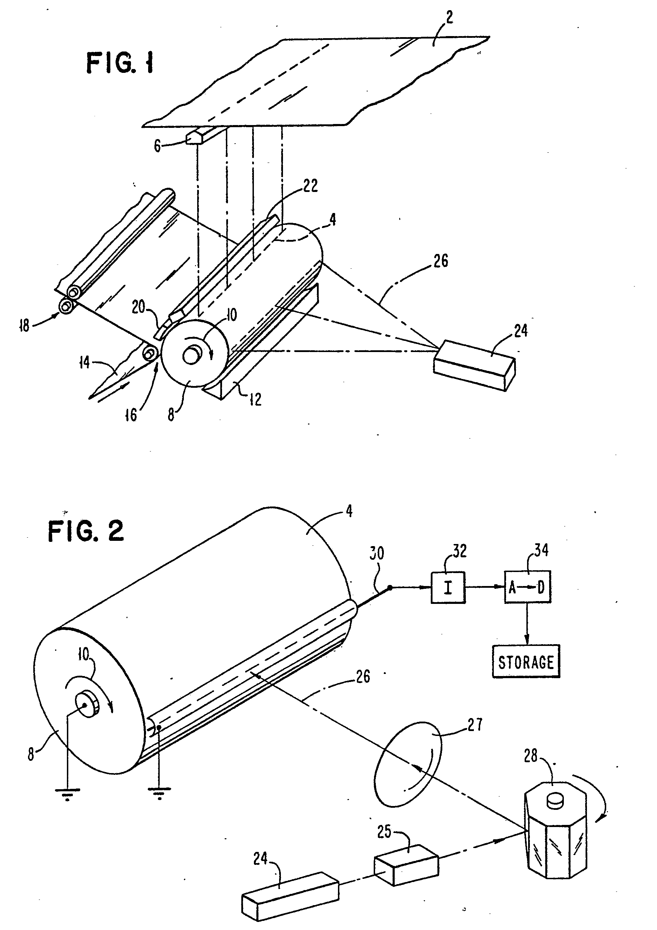

In Fig. 1 there is shown a simplified schematic representation of a xerographic printer/copier. There is seen a document 2 from which an image is projected onto a photoconductor surface 4 via reflected light at an exposure station 6. Prior to projection of the image surface 4 is charged by a corona cloud from a wire maintained at high voltage at charging station 22. The resulting image is in the form of a charge pattern on the photoconductor surface 4 which is contiguous with rotating drum 8. Drum 8 rotates in the direction of arrow 10. The charge pattern corresponding to the document image is developed with toner at station 12. The toned image is then transferred to the surface of a recording medium such as paper 14 at image transfer station 16 and is fused onto the paper 14 by rollers 18. After the section of drum 8 under consideration passes transfer station 16 it is cleaned by cleaner 20, after which the photoconductor surface 4 is recharged at charging station 22.

When the device is used in the printing mode the scanning laser 24 and its optical system is added. A scanned and modulated laser beam 26 is scanned on the photoconductor surface 4 adjacent to toner station 12 in order to discharge the photoconductor surface, previously uniformly charged at station 22, and thereby form a charged image thereon. As in the copier mode, the image is toned and transferred to a recording surface such as paper.

For the sake of simplicity in Fig. 2 there is shown only the drum 8 having photoconductor surface 4 thereon together with additions embodying the present invention. In this system, a charge pattern image is formed from a document 2 on the photoconductor 4 as indicated above. As drum 8 is rotated in the direction of arrow 10 the image is scanned by laser beam 26. Laser beam 26 is generated from laser 24, is passed through modulator 25 and is scanned across drum 8 by rotating mirror segments 28 via lens 27. As laser beam 26 sweeps perpendicularly across the photoconductor surface 4, current is discharged from charged portions of the image where the original image was dark. The current discharged from the photoconductor 4 induces a current on a sense electrode 30, which is amplified. The amplified current is modified by the compensation circuit 32 then converted to a coded signal at codifier 34.

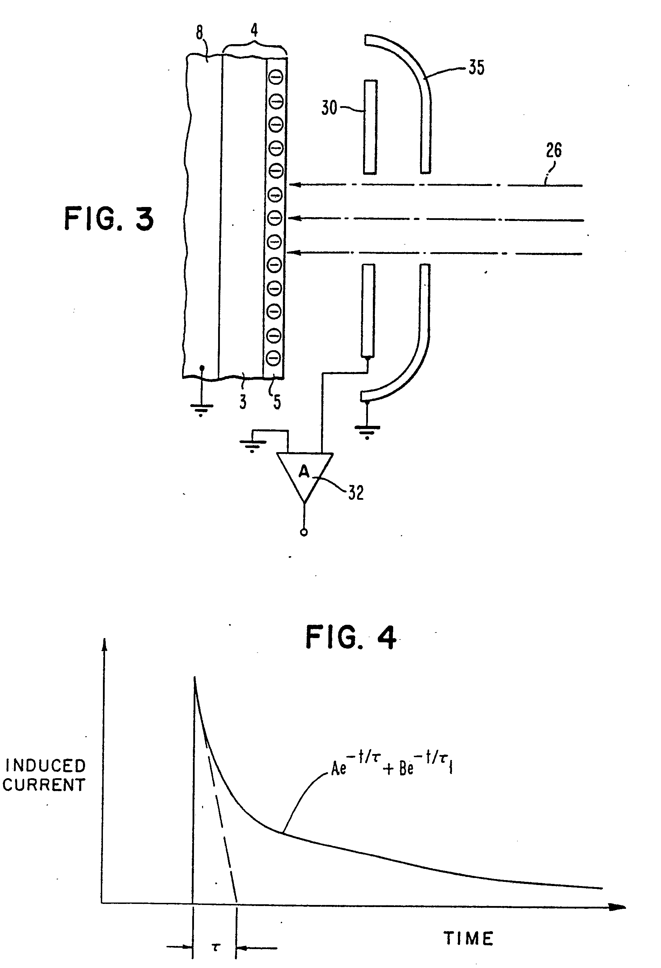

Fig. 3 depicts the present system in detail. There is shown sense electrode 30 together with compensation circuit 32. Adjacent to electrode 30 is shield 35 which is used to minimize noise that is present in the environment of the drum. A cross section of photoconductor 4 shows that the photoconductor 4 has both a charge generation layer 3 and a charge transport layer 5, as is common with photocopiers employing organic photoconductors.

In operation, the photoconductor surface 4 is charged at 22 by a corona wire maintained at a high voltage. The charged photoconductor 4 is exposed, as in a conventional photocopier (see Fig. 1), to light reflected from an image of the object to be copied. The result is a surface charge or potential image on the photoconductor 4 which corresponds to an image of the object. This surface charge is detected and stored electronically in the following manner. A laser beam 26 (6328 Å, for example) is scanned across the surface of the photmconductor 4 as the photoconductor 4 is moved slowly in a direction perpendicular to the direction of scan. This laser scan system is represented schematically in Fig. 2. The small spot of laser light which is scanned impinging on the surface of the photoconductor causes the surface charge to be neutralized. As a result, the surface potential at the scanned spot changes from the initial charged value to zero. The change in surface potential is detected by a sense electrode 30 near the photoconductor surface along the path of the scanned light spot, and converted into a coded electronic signal suitable for facsimile transmission or for storage in a computer memory/storage.

Details of the charge detection are shown in Fig. 3, which displays schematically a cross-section of the photoconductor and the detection electrode. The peak of the current pulse produced by the discharge of one picture element of dimension $l^2$ is $i_p$, where

$$i_p = \frac{G l^2 \varepsilon_o}{d \tau} \Delta V_o$$

and where

$\varepsilon_o$ is the dieelectric permittivity of free space

$\Delta V_o$ is the change in surface potential,

d is the photoconductor-electrode spacing,

G is a geometry factor, typically $0.1 < G < 10$, relating to the configuration of the electrode,

$\tau$ is the transit time of fast charge in the photoconductor, related to free carrier mobility.

For typical conditions the discharge of the fully charged, or unexposed, photoconductor will induce a current i in the sense electrode

$$i \cong \frac{(1)\ (10^{-4}\ m)^2\ (8.85 \times 10^{-12} \frac{As}{Vm})\ (500\ V)}{(10^{-3}\ m)\ (10^{-7}\ s)}$$

or

$$i \cong 4.4 \times 10^{-7}\ A$$

where the typical conditions are chosen to be the following,

$$G=1$$
$$l=10^{-4}\ m$$
$$d=10^{-3}\ m$$
$$\tau=10^{-7}\ s$$
$$\Delta V=500\ V$$

The induced current is high enough to permit detection by a conventional low impedance video amplifier.

The signal current measured in practice may vary considerably from the above. The transmit time $\tau$ for the rapid component of the charge in typical photoconductive films lies in the range from $\tau=2 \times 10^{-7}$ second to $2 \times 10^{-11}$.

This range of transit times is determined from relationship

$$\tau \cong \frac{a^2}{\mu V}$$

where

a is the thickness of the charge transport layer,

$\mu$ is the free carrier mobility,

V is the initial surface voltage.

Typically, $a=10^{-5}$ m, $\mu=10^{-6}$ to $10^{-2} m^2/V$ sec, and $V \cong 500$ V, for the charge transport layers used in photocopying machines. At times long compared to the fast transit time, the current is dominated by the slow component which is due to the trapping and re-release of charge.

Noise in the image detection system can be classified into a few dominant categories: microphonic noise due to vibration of the electrode, noise in the laser light source, and leakage electromagnetic interference (EMI) from the corona wire used in the photocopier. The microphonic noise can be minimized by standard vibration damping techniques. EMI noise, particularly that generated by the corona wire, can be minimized by shielding the detector electrode 30 with shield 35 and input circuitry. Laser noise depends upon the type and age of the laser and its power supply.

A difficulty with the laser discharge method of detection arises because of the complex time response of the photoconductor. The instantaneous excitation of charge results in an induced current which extends over a finite period of time. The two components of the time response, fast and slow, are determined by the transit time and the trapping and re-release of charge, respectively, for charge carriers in the charge transport layer 3. The induced current produced by scanning the laser across a negligibly small spot of charge is represented in Fig. 4. Each spot of charge which is discharged by the scanned laser induces a similar component of current, all of which add up to the total measured current.

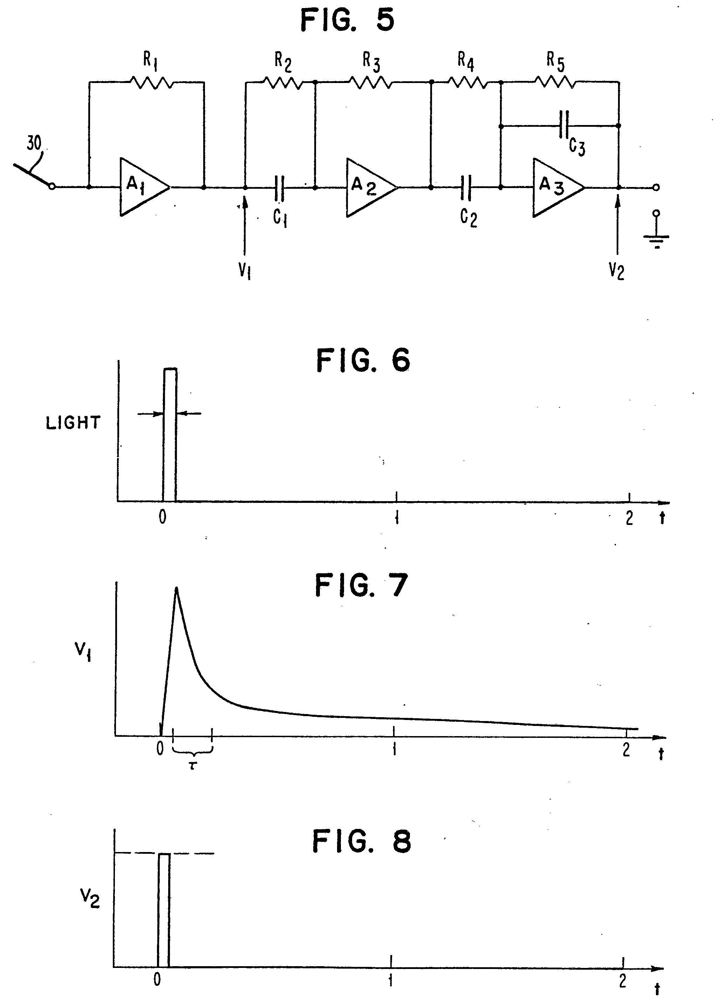

The induced current in the ideal case represented in Fig. 4, rises rapidly to a maximum value and then decays exponentially with the fast time constant $\tau$, which is due to the finite transit time of the charge carriers. A large background current due to the straggling of charge carriers decays more slowly, with a time constant $\tau_1$. Generally, the transit time $\tau$ is comparable to the time required to scan one picture element, while the time $\tau_1$, is much longer. The effect of the finite decay times $\tau$ and $\tau_1$ is to blur the images detected by this technique. A technique for improving the detected image by removing the blurring of the image involves the use of an electronic compensation circuit. One example of such a circuit is shown in Fig. 5.

The operation of the circuit in Fig. 5 is outlined by the sequence of signals shown in Figs. 6, 7 and 8. Here, a pulse of light is applied to a charged area of the photoconductor, as is represented in Fig. 6. The discharge of the photoconductor surface induces a current in the sense electrode 30, which is detected as a voltage $V_1$ (Fig. 7). The voltage $V_1$, which decays with both a fast component $\tau$ and a slow component $\tau_1$, is equal to the induced current multiplied by $R_1$. The amplifiers $A_1$, $A_2$ and $A_3$ are high gain, wide band operational amplifiers. The voltage $V_1$ is typically

$$V_1 = Ae^{-t/\tau} + BE^{-t/\tau_1}$$

where A and B are determined by characteristics of the photoconductor, and t is time. The output voltage $V_2$ (Fig. 8) from the compensation circuit is

$$V_2 = \frac{R_3 C_1 C_2}{C_3} \cdot \frac{(S+\frac{1}{R_4 C_2})\ S+\frac{1}{R_2 C_1})}{(S+\frac{1}{R_5 C_3})}\ V_1$$

where S represents the transfer function of the amplifiers.

The combination of resistors and capacitors is adjusted so that,

$$R_2 C_1 = \tau$$

$$R_4 C_2 = \tau_1$$

and

$$R_5 C_3 = \frac{(A+B)\tau\tau_1}{A\tau_1 + B\tau}$$

The resistors may all be chosen to be a common value such as 10 KΩ so that the capacitors $C_1$, $C_2$, and $C_3$ are determined from the equations supra. For such values of components, the output of the compensation circuit is $V_2$, which shows no effect of the blurring due to the finite decay times $\tau$ and $\tau_1$, as is illustrated in Fig. 8.

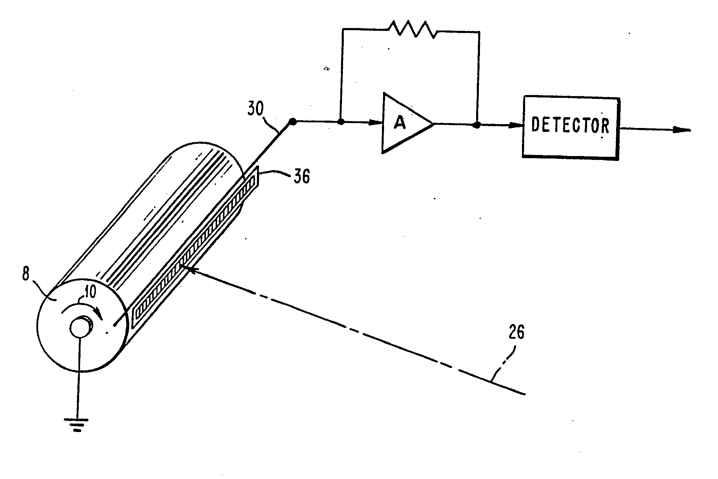

An alternative scheme for eliminating the effect of the finite response time of the photoconductor is outlined in Fig. 9. Here, the scanned laser light beam 26 is chopped at a fixed frequency, and the resulting current measured on the sense electrode 30 is amplified and filtered to detect signals at the chopping frequency. The output of the electrode does not exhibit the blurring of the detected image which is normally caused by the finite response time of the photoconductor. In this scheme, it is important that the chopping frequency is higher than the highest frequency in the detected signal. One scheme for accomplishing the chopping of the scanned laser light involves passing the scanning laser beam through a slotted aperture 36 which is in proximity to the sense electrode structure, as is illustrated in Fig. 9.

## Claims

1. A xerographic printer/copier device including a converter for converting information from a latent image of an original document into electrical signals comprising a photoconductive imaging element (8) having a surface (4) movable along a closed path past a plurality of processing stations including a charging station (22), a copying station (6) operable to expose the surface, when charged, to an image of an original document to form a latent image thereon, and a printing station (24, 26) operable to expose the surface, when charged, to a modulated light beam scanned across the surface along a fixed line position orthogonal to the direction of movement thereof to form a latent image on the surface corresponding to modulation of the beam, characterised by a sense electrode (30) positioned at the printing station and extending across the surface adjacent said line position and spaced from the surface such as to sense changes of charge on the surface whereby, when a latent image produced by the copying station is discharged by scanning by the light beam, when unmodulated, electrical signals corresponding to the content of the latent image are induced in the electrode, and means (32, 34) coupled to the sense electrode to modify and convert the electrical signals to coded signals.

2. A xerographic printer/copier device as claimed in Claim 1 further characterised in that said light beam is a laser beam.

3. A xerographic printer/copier device as claimed in Claim 1 or Claim 2 further characterised by a shield member (35) for shielding the electrode from electromagnetic interference noise.

4. A xerographic printer/copier as claimed in Claim 3 in which the electrode is in the form of a plate, and the electrode and shield each includes a slot through which the scanning light beam passes.

5. A xerographic printer/copier as claimed in Claim 1 or Claim 2 further characterised by a slotted aperture device (36) configured to interrupt the light beam periodically as it scans across the photoconductor surface.

## Revendications

1. Dispositif d'impression/de reproduction xérographique comprenant un convertisseur permettant de convertir des informations provenant d'une image latent d'un document original en signaus électriques, comportant un élément photoconducteur de formation d'image (8) possédant une surface (4) qui se déplace cycliquement en regard de plusieurs stations de traitement comprenant une station de charge (22), une station de reproduction (6) permettant d'exposer ladite surface, lorsqu'elle est chargée, à une image d'un document original pour former sur celle-ci une image latente, et une station d-impression (24, 26) permettant d'exposer ladite surface, lorsqu'elle est chargée, à un faisceau lumineux modulé, ladite exposition étant effectuée le long d'une ligne fixe perpendiculaire au sens dans lequel la surface se déplace afin de former sur celle-ci une image latent correspondant à la modulation du faisceau, ledit dispositif étant caractérisé en ce qu'il comprend une électrode de détection (30) située au niveau de la station d'impression et s'étendant transversalement par rapport à ladite surface à proximité immédiate de ladite ligne fixe, ladite électrode étant séparée de ladite surface de manière à pouvoir détecter les variations de charge de cette dernière, de telle sorte que, lorsqu'une image latente produite par la station de reproduction est déchargée en raison du balayage effectué par le faisceau lumineux, lorsque celui-ci n'est pas modulé, des signaux électriques correspondant au contenu de l'image latente soient induits dans l'électrode, et des moyens (32, 34) connectés à ladite électrode de détection afin de modifier les signaux électriques et de les convertir en signaux codés.

2. Dispositif d'impression/de reproduction xérographique selon la revendication 1, caractérisé en outre en ce que ledit faisceau lumineux est un faisceau laser.

3. Dispositif d'impression/de reproduction selon la revendication 1 ou 2, caractérisé en outre en ce qu'il comporte un écran (35) servant à protéger l'électrode des interférences électromagnétiques.

4. Dispositif d'impression/de reproduction xérographique selon la revendication 3, caractérisé en ce que ladite électrode a la forme d'une plaque, et en ce que l'électrode et l'écran comprennent chacun une fente que traverse le faisceau lumineux de balayage.

5. Dispositif d'impression/de reproduction xérographique selon la revendication 1 ou 2, caractérisé en outre en ce qu'il comprend un dispositif (36) comportant un certain nombre de fentes et permettant d'interrompre périodiquement le faisceau lumineux lorsque ce dernier balaie la surface photoconductrice.

**Patentansprüche**

1. Xerographische Druck/Kopiereinrichtung mit einem Umsetzer zur Umsetzung von Information von einem latenten Bild eines Originaldokuments in elektrische Signale, mit einem photoleitenden Bildelement (8), dessen Oberfläche (4) in einem geschlossenen Pfad an einer Anzahl von Verarbeitungsstationen vorbeiführbar ist, die eine Aufladestation (22), eine Kopierstation (6), die zur Belichtung der aufgeladenen Oberfläche mit einem Bild vom Originaldokument zur Erzeugung eines latenten Bildes auf der Oberfläche dient, sowie eine Druckstation (24, 26) enthält, welche die Oberfläche nach ihrer Aufladung einem modulierten Lichtstrahl aussetzt, der über die Oberfläche quer zur Bewegungsrichtung derselben entlang einer festen Zeilenposition ausgelenkt wird zur Erzeugung eines latenten Bildes auf der Oberfläche entsprechend der Strahlmodulation, gekennzeichnet durch eine Abtastelektrode (30), die an der Druckstation angeordnet ist und sich benachbart der besagten Zeilenposition über die Oberfläche erstreckt und von dieser einem Abstand aufweist, so daß sie Ladungsänderungen auf der Oberfläche abtastet, wodurch bei der Entladung eines durch die Kopierstation erzeugten latenten Bildes mittels des unmodulierten Lichtstrahls elektrische Signale entsprechend dem Inhalt des latenten Bildes in der Elektrode induziert werden, und gekennzeichnet durch Mittel (32, 34), die mit der Abtastelektrode gekoppelt sind zur Modifizierung und Umwertung der elektrischen Signale in codierte Signale.

2. Ein xerographisches Druck/Kopiergerät nach Anspruch 1, weiter dadurch gekennzeichnet, daß der besagte Lichtstrahl ein Laserstrahl ist.

3. Ein xerographisches Druck/Kopiergerät nach Anspruch 1 oder 2, weiter gekennzeichnet durch Abschirmmittel (35) zur Abschirmung der Elektrode von elektromagnetischen Interferenzstörsignalen.

4. Ein xerographisches Druck/Kopiergerät nach Anspruch 3, in welchem die Elektrode die Form einer Platte hat und sowohl die Elektrode als auch der Schirm einen Schlitz enthält, durch den der abtastende Lichtstrahl hindurchtritt.

5. Ein xerographisches Druck/Kopiergerät nach Anspruch 1 oder 2, weiter gekennzeichnet durch eine geschlitzte Blendeneinrichtung (36) die so ausgebildet ist, daß sie den Lichtstrahl während seiner Abtastbewegung über die Photoleiteroberfläche periodisch unterbricht.

# FIG. 1

# FIG. 2

O 002 102

FIG. 3

FIG. 4

$$Ae^{-t/\tau} + Be^{-t/\tau_1}$$

INDUCED CURRENT

TIME

$\tau$

2

# FIG. 5

# FIG. 6

LIGHT

# FIG. 7

$V_1$

# FIG. 8

$V_2$